# EUROPEAN PATENT APPLICATION

(11) **EP 4 822 723 A1**
(43) Date of publication of application: **14.10.2026**
(21) Application number: 24899980.7
(22) Date of filing: 06.12.2024
(51) Int. Cl.: H01G 2/02

(54) **CAPACITOR SUPPORT FOR ELECTRIC-MOTOR CONTROLLER**

(30) Priority: 06.12.2023 CN 202323333779 U
(71) Applicant: Shanghai Valeo Automotive Electrical Systems Co., Ltd., Shanghai 201201 (CN)
(72) Inventor: JIN, Ying, Shanghai 201201 (CN); LI, Jianping, Shanghai 201201 (CN)
(74) Representative: Valeo Powertrain Systems
(86) International application number: PCT/CN2024/137509
(87) International publication number: WO 2025/119347

(57) **Abstract**

The present application belongs to the technical field of electric-motor controllers. Disclosed is a capacitor support for a motor controller. The capacitor support for a motor controller comprises: a support base, a first power terminal, a second power terminal and a sealing moulded member, wherein one end of the first power terminal passes through a surface of the support base, and one end of the second power terminal passes through the surface of the support base. The sealing moulded member is connected to the support base, a moulded cavity is provided inside the sealing moulded member, the end of the first power terminal passing through the support base and the end of the second power terminal passing through the support base can both be located inside the moulded cavity, and the moulded cavity can accommodate a sealant therein and enable the sealant to be cured and moulded. The capacitor support for a motor controller can prevent the position where the first power terminal and a first power supply terminal are welded and the position where the second power terminal and a second power supply terminal are welded from being exposed, thus avoiding corrosion and the formation of salt bridges at said positions; in this way, the occurrence of a short circuit is avoided, thereby ensuring the normal operation of an electric-motor controller.

## Description

### TECHNICAL FIELD

The present application relates to the technical field of motor controllers, in particular to a capacitor support for a motor controller.

### BACKGROUND

A motor controller is an electronic controller integrating multiple functional modules, typically consisting of a microprocessor, a memory, input/output interfaces, a clock circuit, etc., and is capable of performing various functions, such as data processing, signal acquisition, communication control, etc. In addition, the motor controller further comprises a capacitor support to which two power connecting terminals are connected, the two power connecting terminals being used to connect two power supply terminals of an external power supply device, to enable the power supply device to supply power to the motor controller.

In the prior art, a metal cover is arranged above the capacitor support of the motor controller to cover the capacitor support, and the two power connecting terminals extend out of the metal cover. One end of the power supply device is provided with a magnetic ring, and the two power supply terminals extend out of the magnetic ring. Regarding the connection between the motor controller and the power supply device, typically, the motor controller and the power supply device are first fixed, then the two power supply terminals on the power supply device are laser-welded to the power connecting terminals on the motor controller, to enable the power supply device to supply power to the motor controller. Due to the effect of the laser welding process, the surface of the power connecting terminals and the surface of the power supply terminals must not have a plating layer or be enclosed in plastic before welding; furthermore, due to the effect of an assembly process, the power connecting terminals and the power supply terminals must be exposed. Thus, when laser welding of the power connecting terminals to the power supply terminals has been completed, in complex environments of use, due to the combined effects of temperature, humidity and dust impurities, the power connecting terminals and the power supply terminals are highly susceptible to corrosion at their respective laser welding points, resulting in salt bridges. Once salt bridges have formed at the laser welding points of the power connecting terminals and the power supply terminals, they will extend in their respective directions, causing further corrosion of the power connecting terminals and the power supply terminals. At the power connecting terminal side, a short circuit may occur between a power connecting terminal and the metal cover covering the capacitor support. At the power supply terminal side, a short circuit may occur between a power supply terminal and a casing of the power supply device. Such short circuits will cause the motor controller to fail.

Thus, there is an need to develop a capacitor support for a motor controller to solve the abovementioned problem.

### SUMMARY OF THE INVENTION

An objective of the present application is to provide a capacitor support for a motor controller, which can prevent a welding point of a first power connecting terminal and a first power supply terminal and a welding point of a second power connecting terminal and a second power supply terminal from suffering corrosion and salt bridge formation due to exposure, thereby preventing short circuits and ensuring normal operation of the motor controller.

To achieve this objective, the present application employs the following technical solution:
A capacitor support for a motor controller, the capacitor support for a motor controller being connected to a power supply device, and the power supply device being provided with a first power supply terminal and a second power supply terminal, the capacitor support comprising:
a support base with a first through-hole and a second through-hole;
a first power connecting terminal, the first power connecting terminal being connected to the support base, one end of the first power connecting terminal passing out of the support base via the first through-hole, and the first power connecting terminal being connectable to the first power supply terminal;
a second power connecting terminal, the second power connecting terminal being connected to the support base, one end of the second power connecting terminal passing out of the support base via the second through-hole, and the second power connecting terminal being connectable to the second power supply terminal;
a sealing moulded member, the sealing moulded member being connected to the support base, and the sealing moulded member being arranged at a peripheral side of the end of the first power connecting terminal that passes out of the support base and the end of the second power connecting terminal that passes out of the support base, the sealing moulded member including a moulded cavity inside, the end of the first power connecting terminal that passes out of the support base and the end of the second power connecting terminal that passes out of the support base (being able to be received inside the moulded cavity, and the moulded cavity being able to contain a sealant and enable it to be cured and moulded.

Further, the sealing moulded member comprises a moulded cover, the interior of the moulded cover being a cavity so as to form the moulded cavity, and a side of the moulded cover that faces the support base is provided with a first opening which can be closed by the support base.

Further, the sealing moulded member further comprises a moulded ring, the moulded ring being connected to the support base, the moulded ring being provided around the peripheral side of the end of the first power connecting terminal that passes out of the support base and the end of the second power connecting terminal that passes out of the support base, a side wall of the moulded ring forming a moulded recess with the support base, and the moulded cover being able to be located within the moulded recess.

Further, a cover area of the moulded cover is less than a recess bottom area of the moulded recess, and a gap is formed between a side wall of the moulded cover and a side wall of the moulded ring.

Further, a side wall at one side of the moulded cover is provided with a first recess, and a side wall at one side of the moulded ring is provided with a second recess, and the first recess corresponds to the second recess to form a sealant injection space.

Further, the power supply device comprises a magnetic ring provided with a third through-hole and a fourth through-hole, one end of the first power supply terminal passing out of the magnetic ring via the third through-hole, and one end of the second power supply terminal passing out of the magnetic ring via the fourth through-hole;
a side of the moulded cover that faces the magnetic ring is provided with a second opening, and the magnetic ring is able to close the second opening.

Further, the side of the moulded cover that faces the magnetic ring is provided with a positioning slot, and a side of the magnetic ring that faces the moulded cover is provided with a positioning protrusion, the positioning protrusion being insertable in the positioning slot.

Further, the sealing moulded member is designed as a moulded wall, the moulded wall being connected to the support base, the moulded wall surrounding the peripheral side of the end of the first power connecting terminal that passes out of the support base and the end of the second power connecting terminal that passes out of the support base, a side wall of the moulded wall forming the moulded cavity with the support base, and an end of the moulded wall deviating from the support base having a greater height than the end of the first power connecting terminal that passes out of the support base and the end of the second power connecting terminal that passes out of the support base.

Further, the power supply device comprises a magnetic ring provided with a third through-hole and a fourth through-hole, one end of the first power supply terminal passing out of the magnetic ring via the third through-hole, and one end of the second power supply terminal passing out of the magnetic ring via the fourth through-hole;
a first glue layer is provided between the moulded wall and the magnetic ring, the first glue layer surrounding a peripheral side of the first power supply terminal and the second power supply terminal.

Further, a second glue layer is further provided between the first glue layer and the magnetic ring, the second glue layer surrounding the peripheral side of the first power supply terminal and the second power supply terminal, and the second glue layer being able to block the third through-hole and the fourth through-hole.

### Beneficial effects of the present application:

In the capacitor support for a motor controller as provided in the present application, the first power connecting terminal and the second power connecting terminal can be located within the moulded cavity in the sealing moulded member. Once the first power connecting terminal has been laser-welded to the first power supply terminal and the second power connecting terminal has been laser-welded to the second power supply terminal, the welding point of the first power connecting terminal and the first power supply terminal and the welding point of the second power connecting terminal and the second power supply terminal can likewise be located within the moulded cavity. Sealant is provided within the moulded cavity, and the combination of the sealant and the sealing moulded member can enclose the welding point of the first power connecting terminal and the first power supply terminal and the welding point of the second power connecting terminal and the second power supply terminal. In actual use, the welding point of the first power connecting terminal and the first power supply terminal and the welding point of the second power connecting terminal and the second power supply terminal can be prevented from suffering corrosion and salt bridge formation due to exposure, thereby preventing short circuits and ensuring normal operation of the motor controller.

### BRIEF DESCRIPTION OF THE DRAWINGS

Fig. 1 is a first overall axonometric drawing of the connection between a capacitor support for a motor controller as provided in the present application document and a power supply device.
Fig. 2 is a first partial axonometric drawing of the connection between a capacitor support for a motor controller as provided in the present application document and a power supply device.
Fig. 3 is a second partial axonometric drawing of the connection between a capacitor support for a motor controller as provided in the present application document and a power supply device.
Fig. 4 is a third partial axonometric drawing of the connection between a capacitor support for a motor controller as provided in the present application document and a power supply device.
Fig. 5 is a second overall axonometric drawing of the connection between a capacitor support for a motor controller as provided in the present application document and a power supply device.
Fig. 6 is a third overall axonometric drawing of the connection between a capacitor support for a motor controller as provided in the present application document and a power supply device.
Fig. 7 is a fourth partial axonometric drawing of the connection between a capacitor support for a motor controller as provided in the present application document and a power supply device.

### DETAILED DESCRIPTION OF THE INVENTION

Embodiments of the present application are described in detail below; examples of embodiments are shown in the drawings, throughout which, identical or similar labels indicate identical or similar elements, or elements with identical or similar functions. The embodiments described below with reference to the drawings are exemplary, being intended to explain the present application, but should not be construed as limiting it.

In the description of the present application, it should be explained that orientation or position relationships indicated by terms such as "centre", "up", "down", "left", "right", "vertical", "horizontal", "inside" and "outside" are based on the orientation or position relationships shown in the drawings, and are merely intended to facilitate and simplify the description of the present application, without indicating or implying that the apparatus or element referred to must have a particular orientation or be constructed and operated in a particular orientation, and therefore should not be construed as limiting the present application. In addition, the terms "first" and "second" are merely used for descriptive purposes, and should not be construed as indicating or implying relative importance. The terms "first position" and "second position" are two different positions.

Unless otherwise explicitly specified and defined, the terms "install", "connected", "connect" and "fix" should be understood in a broad sense, e.g. may mean a fixed connection or a detachable connection, a mechanical connection or an electrical connection, a direct connection or an indirect connection via an intermediate medium, an internal connection between two elements or an interactive relationship between two elements. Those skilled in the art may interpret the specific meanings of the abovementioned terms in the present application according to the particular situation.

Unless otherwise explicitly specified and defined, a first feature being "on" or "under" a second feature may include direct contact between the first feature and the second feature, or contact between the first feature and the second feature via another feature therebetween rather than directly. Moreover, a first feature being "on", "above" and "on top of" a second feature includes the first feature being directly above and obliquely above the second feature, or merely indicates that the horizontal height of the first feature is greater than that of the second feature. A first feature being "under", "below" and "underneath" a second feature includes the first feature being directly above and obliquely above the second feature, or merely indicates that the horizontal height of the first feature is less than that of the second feature.

The technical solution of the present application is explained further below in conjunction with the drawings through specific embodiments.

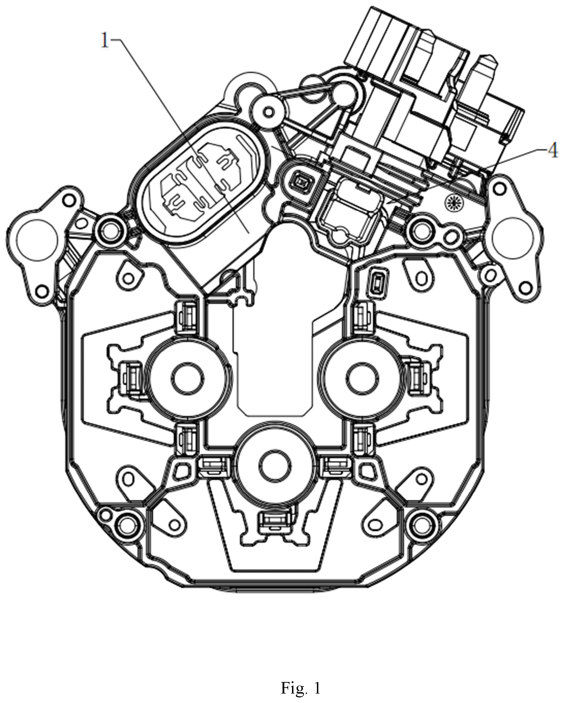

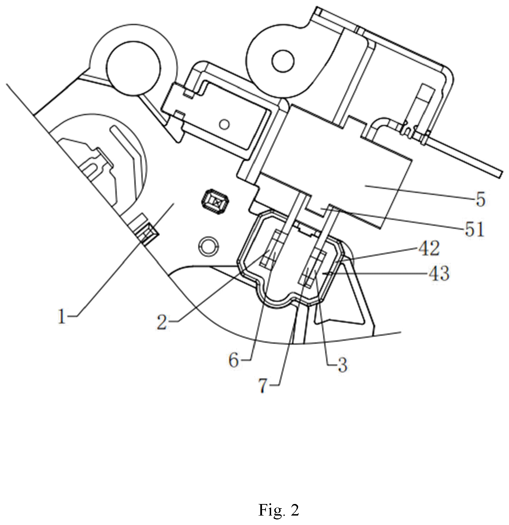

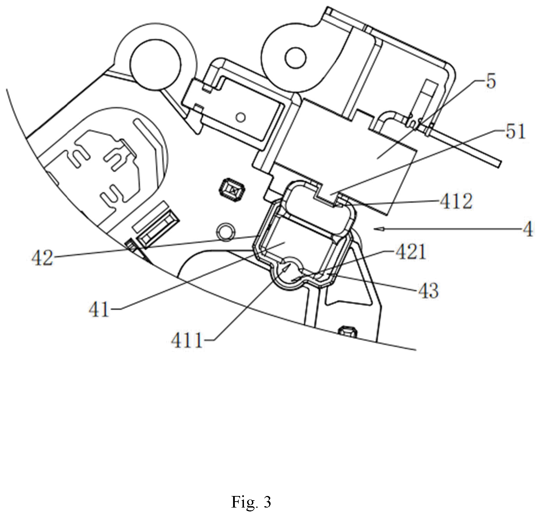

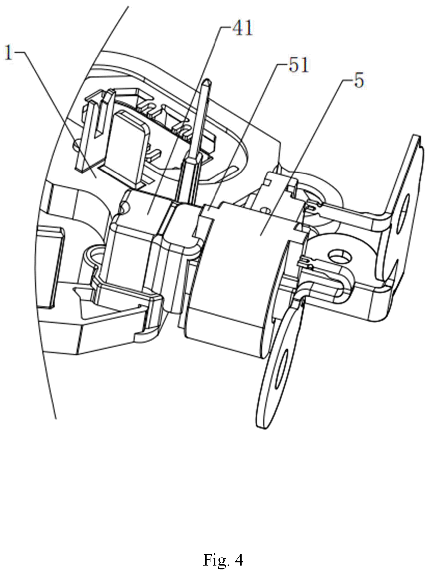

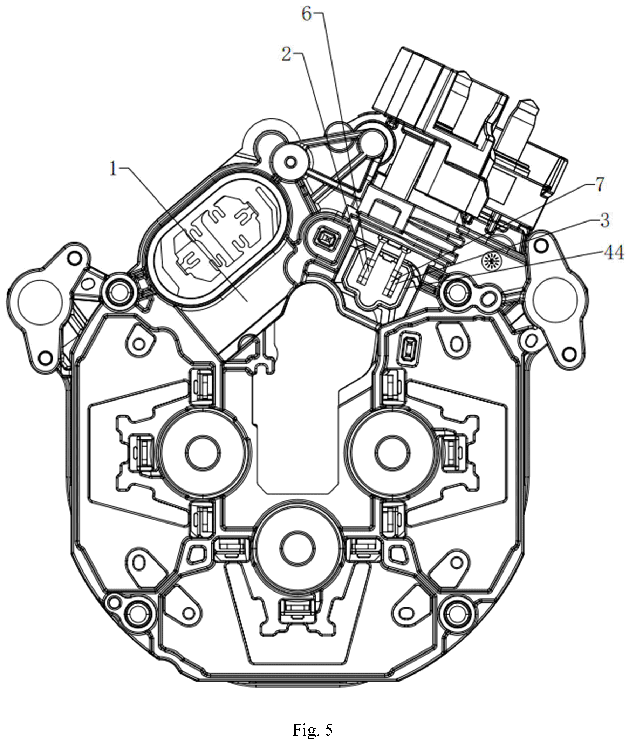

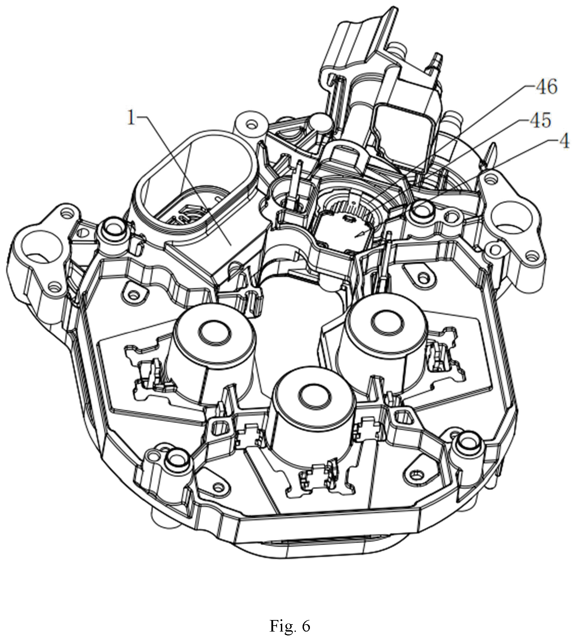

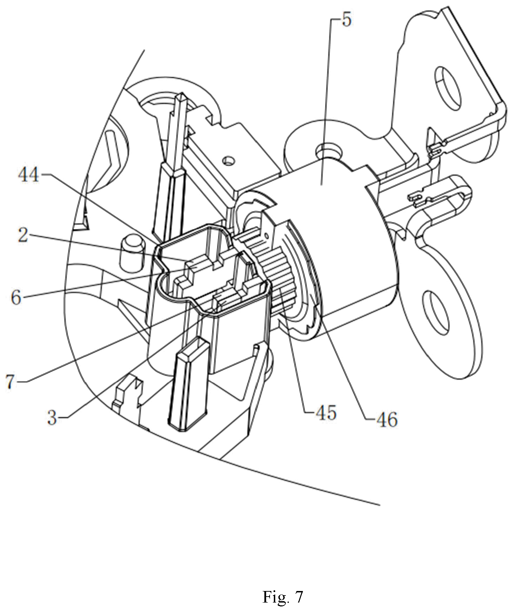

As shown in Figs. 1 - 7, the present application provides a capacitor support for a motor controller, which can prevent a welding point of a first power connecting terminal and a first power supply terminal and a welding point of a second power connecting terminal and a second power supply terminal from suffering corrosion and salt bridge formation due to exposure, thereby preventing short circuits and ensuring normal operation of the motor controller.

The capacitor support for a motor controller as provided in the present application is connected to a power supply device, on which are provided a first power supply terminal 6 and a second power supply terminal 7. The capacitor support for a motor controller comprises a support base 1, a first power connecting terminal 2, a second power connecting terminal 3 and a sealing moulded member 4, wherein a first through-hole and a second through-hole are provided on the support base 1. The first power connecting terminal 2 is connected to the support base 1, one end of the first power connecting terminal 2 passes out of a surface of the support base 1 via the first through-hole, and the first power connecting terminal 2 can be connected to the first power supply terminal 6. The second power connecting terminal 3 is connected to the support base 1, one end of the second power connecting terminal 3 passes out of a surface of the support base 1 via the second through-hole, and the second power connecting terminal 3 can be connected to the second power supply terminal 7. The sealing moulded member 4 is connected to the support base 1, and the sealing moulded member 4 is arranged at a peripheral side of the end of the first power connecting terminal 2 that passes out of the support base 1 and the end of the second power connecting terminal 3 that passes out of the support base 1. The sealing moulded member 4 contains a moulded cavity; the end of the first power connecting terminal 2 that passes out of the support base 1 and the end of the second power connecting terminal 3 that passes out of the support base 1 can both be located inside the moulded cavity, and the interior of the moulded cavity can contain a sealant and cure and mould the sealant.

In the capacitor support for a motor controller as provided in the present application, the first power connecting terminal 2 and the second power connecting terminal 3 can be located within the moulded cavity in the sealing moulded member 4. Once the first power connecting terminal 2 has been laser-welded to the first power supply terminal 6 and the second power connecting terminal 3 has been laser-welded to the second power supply terminal 7, the welding point of the first power connecting terminal 2 and the first power supply terminal 6 and the welding point of the second power connecting terminal 3 and the second power supply terminal 7 can likewise be located within the moulded cavity. Sealant is provided within the moulded cavity, and the combination of the sealant and the sealing moulded member 4 can enclose the welding point of the first power connecting terminal 2 and the first power supply terminal 6 and the welding point of the second power connecting terminal 3 and the second power supply terminal 7. In actual use, the welding point of the first power connecting terminal 2 and the first power supply terminal 6 and the welding point of the second power connecting terminal 3 and the second power supply terminal 7 can be prevented from suffering corrosion and salt bridge formation due to exposure, thereby preventing short circuits and ensuring normal operation of the motor controller.

In an embodiment, the sealing moulded member 4 comprises a moulded cover 41; the interior of the moulded cover 41 is a cavity, so as to form the moulded cavity, and a side of the moulded cover 41 facing the support base 1 is provided with a first opening, which can be closed by the support base 1. With the configuration described above, the moulded cover 41 covers the welding point of the first power connecting terminal 2 and the first power supply terminal 6 and the welding point of the second power connecting terminal 3 and the second power supply terminal 7 via the first opening, achieving all-round enclosure of the welding point of the first power connecting terminal 2 and the first power supply terminal 6 and the welding point of the second power connecting terminal 3 and the second power supply terminal 7, and thus being able to provide, in combination with sealing by the sealant, effective protection for the welding point of the first power connecting terminal 2 and the first power supply terminal 6 and the welding point of the second power connecting terminal 3 and the second power supply terminal 7, to ensure normal operation of the motor controller.

To facilitate preliminary positioning of the moulded cover 41 and at the same time improve sealing, the sealing moulded member 4 further comprises a moulded ring 42, the moulded ring 42 being connected to the support base 1. The moulded ring 42 is provided around a peripheral side of the end of the first power connecting terminal 2 that passes out of the support base 1 and the end of the second power connecting terminal 3 that passes out of the support base 1. A side wall of the moulded ring 42 forms a moulded recess 43 with the support base 1, and the moulded cover 41 can be located within the moulded recess 43. The configuration of the moulded ring 42 enables preliminary positioning of the moulded cover 41, and also enables preliminary shaping of the sealant when this is in a liquid state, so that the sealant can have a given thickness after being moulded, improving the sealing between the moulded cover 41 and a bottom wall of the moulded recess 43.

Further, a cover area of the moulded cover 41 is less than a recess bottom area of the moulded recess 43, and a gap is present between a side wall of the moulded cover 41 and a side wall of the moulded ring 42. With the configuration described above, the sealant can remain and be moulded in the gap, making it easier for a worker to directly observe the moulded thickness of the sealant.

In addition, due to the fact that a gap is present between the side wall of the moulded cover 41 and the side wall of the moulded ring 42, in order to ensure that the relative positions of the moulded cover 41 and the moulded ring 42 are fixed, a positioning piece is provided on the side wall of the moulded cover 41. An end of the positioning piece deviating from the moulded cover 41 can abut the side wall of the moulded ring 42, to position the moulded cover 41 within the moulded recess 43.

To make it easier for a worker to pour the sealant, a first recess 411 is provided on the side wall at one side of the moulded cover 41, and a second recess 421 is provided on the side wall at one side of the moulded ring 42. The first recess 411 and the second recess 421 correspond to each other to form a glue injection space. With the configuration described above, a worker can pour the sealant via the glue injection space, so worker operations are facilitated.

The power supply device comprises a magnetic ring 5; a third through-hole and a fourth through-hole are provided in the magnetic ring 5. One end of the first power supply terminal 6 passes out of the magnetic ring 5 via the third through-hole, and one end of the second power supply terminal 7 passes out of the magnetic ring 5 via the fourth through-hole. A side of the moulded cover 41 that faces the magnetic ring 5 is provided with a second opening, which can be closed by the magnetic ring 5. The configuration of the second opening allows the sealant to seal the first power supply terminal 6 and the second power supply terminal 7 at the second opening, to protect the first power supply terminal 6 and the second power supply terminal 7.

To further increase the stability of positioning of the moulded cover 41, the side of the moulded cover 41 that faces the magnetic ring 5 is provided with a positioning slot 412, and a positioning protrusion 51 is provided on a side of the magnetic ring 5 that faces the moulded cover 41, the positioning protrusion 51 being insertable in the positioning slot 412. The configuration of the positioning protrusion 51 and the positioning slot 412 can limit relative displacement between the moulded cover 41 and the magnetic ring 5, increasing the stability of positioning of the moulded cover 41.

In another embodiment, the sealing moulded member 4 is designed as a moulded wall 44, the moulded wall 44 being connected to the support base 1. The moulded wall 44 surrounds a peripheral side of the end of the first power connecting terminal 2 that passes out of the surface of the support base 1 and the end of the second power connecting terminal 3 that passes out of the surface of the support base 1. A side wall of the moulded wall 44 forms a moulded cavity with the support base 1, and an end of the moulded wall 44 deviating from the support base 1 has a greater height than the end of the first power connecting terminal 2 that passes out of the support base 1 and the end of the second power connecting terminal 3 that passes out of the support base 1. As a result of designing the moulded wall 44 to form the moulded cavity, a worker can pour the sealant directly into the moulded cavity. Since the end of the moulded wall 44 deviating from the support base 1 has a greater height than the end of the first power connecting terminal 2 that passes out of the support base 1 and the end of the second power connecting terminal 3 that passes out of the support base 1, once the sealant has been moulded within the moulded cavity, the sealant can achieve all-round enclosure of the welding point of the first power connecting terminal 2 and the first power supply terminal 6 and the welding point of the second power connecting terminal 3 and the second power supply terminal 7, thereby providing effective protection for the welding point of the first power connecting terminal 2 and the first power supply terminal 6 and the welding point of the second power connecting terminal 3 and the second power supply terminal 7, to ensure normal operation of the motor controller.

Further, to provide protection for the first power supply terminal 6 and the second power supply terminal 7, a first glue layer 45 is provided between the moulded wall 44 and the magnetic ring 5, the first glue layer 45 surrounding a peripheral side of the first power supply terminal 6 and the second power supply terminal 7. A second glue layer 46 is further provided between the first glue layer 45 and the magnetic ring 5, the second glue layer 46 surrounding the peripheral side of the first power supply terminal 6 and the second power supply terminal 7, and the second glue layer 46 being able to block the third through-hole and the fourth through-hole. The first glue layer 45 and the second glue layer 46 are both in a solid state.

Clearly, the above embodiments of the present application are merely examples given to clearly explain the present application, and do not limit the forms of implementation thereof. Other changes or modifications in different forms may still be made by those skilled in the art on the basis of the explanation above. It is neither necessary nor possible to list all embodiments here exhaustively. Any amendments, equivalent substitutions and improvements, etc. made within the spirit and principles of the present application should be included within the scope of protection of the claims of the present application.

## Claims

1. A capacitor support for a motor controller, the capacitor support for a motor controller being connected to a power supply device, and the power supply device being provided with a first power supply terminal (6) and a second power supply terminal (7), **characterized in that** the capacitor support comprises:
a support base (1) with a first through-hole and a second through-hole;
a first power connecting terminal (2), the first power connecting terminal (2) being connected to the support base (1), one end of the first power connecting terminal (2) passing out of the support base (1) via the first through-hole, and the first power connecting terminal (2) being connectable to the first power supply terminal (6);
a second power connecting terminal (3), the second power connecting terminal (3) being connected to the support base (1), one end of the second power connecting terminal (3) passing out of the support base (1) via the second through-hole, and the second power connecting terminal (3) being connectable to the second power supply terminal (7);
a sealing moulded member (4), the sealing moulded member (4) being connected to the support base (1), and the sealing moulded member (4) being arranged at a peripheral side of the end of the first power connecting terminal (2) that passes out of the support base (1) and the end of the second power connecting terminal (3) that passes out of the support base (1), the sealing moulded member (4) including a moulded cavity inside, the end of the first power connecting terminal (2) that passes out of the support base (1) and the end of the second power connecting terminal (3) that passes out of the support base (1) being able to be received inside the moulded cavity, and the moulded cavity being able to contain a sealant and enable it to be cured and moulded.

2. The capacitor support for a motor controller according to claim 1, **characterized in that** the sealing moulded member (4) comprises a moulded cover (41), the interior of the moulded cover (41) is a cavity so as to form the moulded cavity, and a side of the moulded cover (41) that faces the support base (1) is provided with a first opening which can be closed by the support base (1).

3. The capacitor support for a motor controller according to claim 2, **characterized in that** the sealing moulded member (4) further comprises a moulded ring (42), the moulded ring (42) is connected to the support base (1), the moulded ring (42) is provided around the peripheral side of the end of the first power connecting terminal (2) that passes out of the support base (1) and the end of the second power connecting terminal (3) that passes out of the support base (1), a side wall of the moulded ring (42) forms a moulded recess (43) with the support base (1), and the moulded cover (41) being able to be located within the moulded recess (43).

4. The capacitor support for a motor controller according to claim 3, **characterized in that** a cover area of the moulded cover (41) is less than a recess bottom area of the moulded recess (43), and a gap is formed between a side wall of the moulded cover (41) and a side wall of the moulded ring (42).

5. The capacitor support for a motor controller according to claim 4, **characterized in that** a side wall at one side of the moulded cover (41) is provided with a first recess (411), and a side wall at one side of the moulded ring (42) is provided with a second recess (421), and the first recess (411) corresponds to the second recess (421) to form a sealant injection space.

6. The capacitor support for a motor controller according to claim 2, **characterized in that** the power supply device comprises a magnetic ring (5), the magnetic ring (5) is provided with a third through-hole and a fourth through-hole, one end of the first power supply terminal (6) passes out of the magnetic ring (5) via the third through-hole, and one end of the second power supply terminal (7) passes out of the magnetic ring (5) via the fourth through-hole;
a side of the moulded cover (41) that faces the magnetic ring (5) is provided with a second opening, and the magnetic ring (5) is able to close the second opening.

7. The capacitor support for a motor controller according to claim 6, **characterized in that** a side of the moulded cover (41) that faces the magnetic ring (5) is provided with a positioning slot (412), and a side of the magnetic ring (5) that faces the moulded cover (41) is provided with a positioning protrusion (51), and the positioning protrusion (51) is able to be inserted in the positioning slot (412).

8. The capacitor support for a motor controller according to claim 1, **characterized in that** the sealing moulded member (4) is formed by a moulded wall (44), the moulded wall (44) is connected to the support base (1), the moulded wall (44) surrounds the peripheral side of the end of the first power connecting terminal (2) that passes out of the support base (1) and the end of the second power connecting terminal (3) that passes out of the support base (1), a side wall of the moulded wall (44) forms the moulded cavity with the support base (1), and an end of the moulded wall (44) deviating from the support base (1) has a greater height than the end of the first power connecting terminal (2) that passes out of the support base (1) and the end of the second power connecting terminal (3) that passes out of the support base (1).

9. The capacitor support for a motor controller according to claim 8, **characterized in that** the power supply device comprises a magnetic ring (5) provided with a third through-hole and a fourth through-hole, one end of the first power supply terminal (6) passes out of the magnetic ring (5) via the third through-hole, and one end of the second power supply terminal (7) passes out of the magnetic ring (5) via the fourth through-hole;
a first glue layer (45) is provided between the moulded wall (44) and the magnetic ring (5), and the first glue layer (45) surrounds a peripheral side of the first power supply terminal (6) and the second power supply terminal (7).

10. The capacitor support for a motor controller according to claim 9, **characterized in that** a second glue layer (46) is further provided between the first glue layer (45) and the magnetic ring (5), the second glue layer (46) surrounds the peripheral side of the first power supply terminal (6) and the second power supply terminal (7), and the second glue layer (46) is able to block the third through-hole and the fourth through-hole.
